(19) Europäisches Patentamt / European Patent Office / Office européen des brevets

(11) **EP 2 108 989 A1**

(12) **EUROPEAN PATENT APPLICATION**

(43) Date of publication:
**14.10.2009 Bulletin 2009/42**

(51) Int Cl.:
***G02B 13/06*** (2006.01)  ***G02B 15/177*** (2006.01)

(21) Application number: **09004128.6**

(22) Date of filing: **23.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS**<br><br>(30) Priority: **08.04.2008 JP 2008099881** | (71) Applicant: **Fujinon Corporation**<br>**Saitama-shi,**<br>**Saitama (JP)**<br><br>(72) Inventor: **Sado, Kenzo**<br>**Saitama-shi**<br>**Saitama (JP)**<br><br>(74) Representative: **Klunker . Schmitt-Nilson . Hirsch**<br>**Destouchesstrasse 68**<br>**80796 München (DE)** |

(54) **Wide angle zoom lens for projection and projecting type display device**

(57) The wide-angle zoom lens for projection is provided with, in order from an magnification side, a first group for focusing which is fixed in during variation of magnification and has a negative refractive power, second to fourth groups, each of which is moved to carry out zooming during variation of magnification, and a fifth group which is fixed in during variation of magnification and has a positive refractive power, and a reduction side of the wide-angle zoom lens is telecentric and a half angle of view of wide-angle zoom lens is 40 degrees or more. The first group is constituted by three lenses, and a first lens on a most magnification side and a third lens on a most reduction side are both surface aspherical plastic lenses and a second lens constituted by a biconcave spherical glass lens between the two aspherical lenses.

FIG. 1

**Description**

BACKGROUND OF INVENTION

Field of the Invention

The present invention relates to a zoom lens to be used as a projection lens for a projector device, and more particularly to a wide-angle zoom lens for projection which is suitable for magnification and projection, onto a screen, an original image formed by a light bulb of a liquid crystal display device or a DMD (digital micromirror device) and a projecting type display device provided with the wide-angle zoom lens for projection.

Description of the Related Art

In recent years, a projector device of a so-called front projecting type which projects an image onto a screen provided ahead of the device has been widely used for a school education, business training or presentation.
A projection lens provided on the projector device of the front projecting type is required to have a variable power function (a zoom function), and to reduce a weight and to increase an angle of view in consideration of a portability of the device and a correspondence to an installing condition.
A projecting zoom lens described in the following JP-A-2003-15038 has been proposed to meet the requirements, for example.
In the projecting zoom lens described in the JP-A-2003-15038, a six-group structure of negative, positive, positive, negative, positive and positive is employed, and furthermore, the second, third and fifth groups are moved to carry out zooming. Moreover, the first group having an outside diameter increased considerably as compared with the other groups and disposed on a most magnification side is constituted by three negative meniscus lenses having convex surfaces turned toward the magnification side together.
In the projecting zoom lens described in the JP-A-2003-15038, however, a f-number is set to be equal to or greater than F2.0 and a brighter projecting zoom lens is demanded.
Moreover, a reduction in a size of a lens system in the projection lens is largely determined by the outside diameter of the first group. In the projecting zoom lens described in the JP-A-2003-15038, however, it is hard to reduce the outside diameter of the first group and a demand of a reduction in a size of the whole lens system may not be met.

SUMMARY OF INVENTION

In consideration of the circumstances, it is an object of the present invention to provide a wide-angle zoom lens for projection which may have a size reduced while maintaining brightness and an excellent optical performance, and a projecting type display device provided with the wide-angle zoom lens for projection.
According to an aspect of the invention, a wide-angle zoom lens for projection includes in order from an magnification side thereof, a focusing lens group that has a negative refractive power and is stationary during a variation of a magnification of the wide-angle zoom lens, three zooming lens groups that are moved independently of each other during the variation of the magnification, and a fixed lens group that is stationary during the variation of the magnification, wherein a reduction side of the wide-angle zoom lens is telecentric and has a half angle of view which is 40 degrees or more, and wherein the focusing lens group includes a first aspherical lens on the magnification side, a second aspherical lens on the reduction side, and a biconcave lens between the first aspherical lens and the second aspherical lens.
According to another aspect of the invention, a wide-angle zoom lens for projection, at least one of the following conditional expressions (1) to (3) may be satisfied,

$$3.0 < \mathrm{Bf/Fw} \qquad (1)$$

$$1.7 < \mathrm{H_A} < 2.0 \qquad (2)$$

$$1.7 < \mathrm{Hw} < 2.0 \qquad (3)$$

Bf: a back focal length of the wide-angle zoom lens,

Fw: a focal length of the wide-angle zoom lens on a wide angle end,

$H_A$ represents a mean value of diameters of an axial luminous flux on the both surfaces of the second aspherical lens in the focusing lens group when the wide-angle zoom lens is placed at an wide angle end thereof and a diameters of the axial luminous flux on an magnification side surface of the first aspherical lens is 1.0, and

Hw represents diameters of an axial luminous flux on the aspherical surface of the second aspherical lens in the focusing lens group when the wide-angle zoom lens is placed at an wide angle end thereof and diameters of the axial luminous flux on an magnification side surface of the first aspherical lens is 1.0.

According to another aspect of the invention, the first aspherical lens has a negative refractive power in a vicinity of an optical axis thereof and a positive refractive power in a region thereof is placed apart from the optical axis in a radial direction.

According to another aspect of the invention, a projecting type display device includes a light source, a light bulb, an illumination optical portion which leads a luminous flux emitted from the light source to the light bulb, and a wide-angle zoom lens for projection according to any of claims 1 to 5, wherein the light bulb optically modulates the luminous flux emitted from the light source and the wide-angle zoom lens for projection projects a modulated luminous flux onto a screen.

According to the aspect of the invention, a structure of the wide-angle zoom lens for projection particularly has the focusing lens group to be the first group disposed on the magnification side is constituted by two aspherical lenses and one biconcave lens disposed between the aspherical lenses. Although brightness and an excellent optical performance may be obtained, consequently, it is possible to reduce sizes of the focusing lens group, and furthermore, the whole lens system of the wide-angle zoom lens.

In the first group, moreover, the lens on the most magnification side and the lens on the most reduction side are set to be the aspherical lenses, respectively. Consequently, it is possible to carry out an aberration correction depending on an angle of view corresponding to an off-axis aberration such as a distortion in the aspherical lens on the magnification side and to carry out a common aberration correction over an angle of view corresponding to an axial aberration such as a spherical aberration in the aspherical lens on the reduction side. Thus, it is possible to efficiently correct various aberrations in a balance irrespective of a wide angle.

According to the aspect of the projecting type display device of the invention, moreover, the wide-angle zoom lens for projection according to the invention is provided. Consequently, it is possible to increase a f-number up to approximately F 1.6 with a zoom function, and furthermore, to achieve a reduction in a size of the device. Therefore, it is possible to remarkably enhance a portability of the device and a convenience in a bright room.

Other aspects and advantages of the present invention will be apparent from the following description and the appended claims.

## BRIEF DESCRIPTION OF THE DRAWINGS

Fig. 1 is a view showing a structure of a wide-angle zoom lens for projection according to a first example;

Fig. 2 is a view showing a structure of a wide-angle zoom lens for projection according to a second example;

Fig. 3 is a chart showing various aberrations of the wide-angle zoom lens for projection according to the first example;

Fig. 4 is a chart showing various aberrations of the wide-angle zoom lens for projection according to the second example; and

Fig. 5 is a view showing a schematic structure of a projecting type display device according to an embodiment.

## DESCRIPTION OF EXEMPLARY EMBODIMENTS

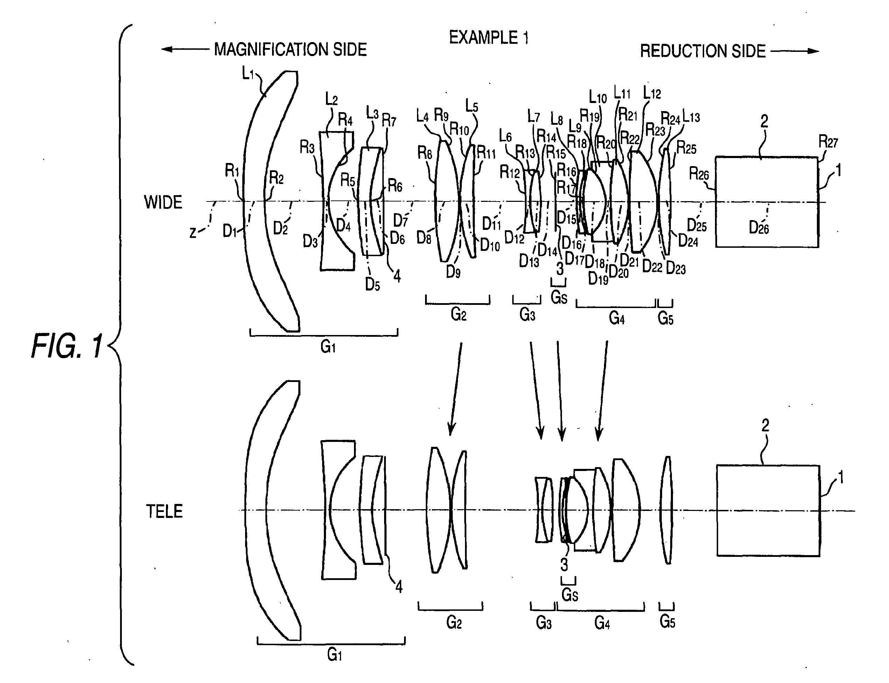

An embodiment according to the present invention will be described below with reference to the drawings. Fig. 1 shows a wide-angle zoom lens for projection according to the present invention, illustrating a structure of a lens according to a first example which will be described below. Description will be given by setting the lens as a representative of the embodiment. In the drawing, z indicates an optical axis.

The wide-angle zoom lens for projection according to the embodiment is obtained by disposing, in order from an magnification side, a first lens group $G_1$ functioning as a focusing lens group which is fixed in a variable power and has a negative refractive power, second to fourth lens groups $G_2$ to $G_4$ functioning as zooming lens groups which are moved independently of each other in the variable power (the second lens group $G_2$ having a positive refractive power, the third lens group $G_3$ having a positive or negative refractive power, and the fourth lens group $G_4$ having a positive refractive power), and a fifth lens group $G_5$ which is fixed in the variable power and has a positive refractive power (in order to prevent a position of an emitting pupil of a whole system from being changed in zooming), and a reduction side is set to be telecentric and a half angle of view is set to be equal to or greater than 40 degrees. Moreover, an aperture stop 3 ($G_s$) (including a virtual aperture stop) is disposed to be independently movable in the zooming. In the first lens group $G_1$, moreover, a mask (which may also be set to be an aperture stop) 4 is disposed on a reduction side of a negative lens (a third lens $L_3$) on a most reduction side.

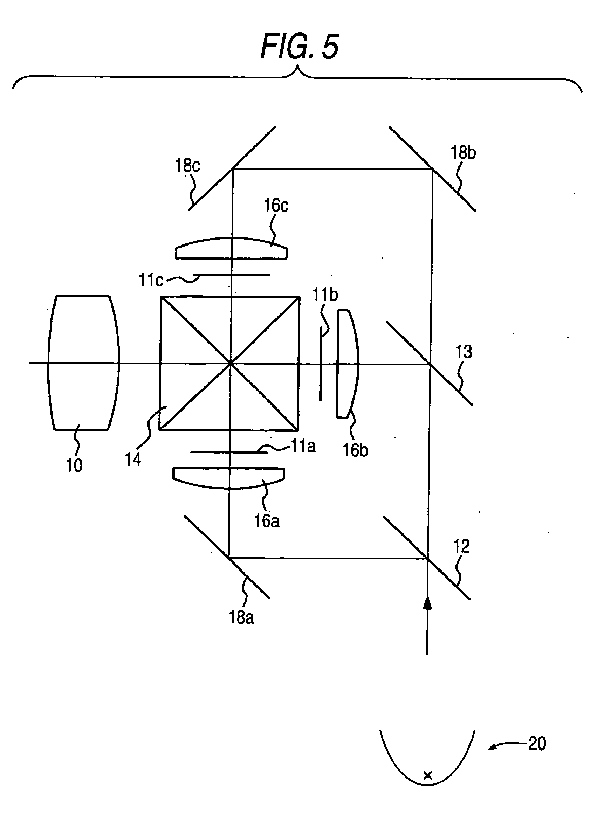

In the wide-angle zoom lens for projection according to the embodiment shown in Fig. 1, a luminous flux which is incident from a right side of the paper and to which image information is given in an image display surface 1 of a light bulb is incident on the wide-angle zoom lens for projection through a glass block 2, and is magnified and projected in a leftward direction of the paper by the wide-angle zoom lens for projection. Fig. 1 shows only the image display surface 1 of a single light bulb for easy understanding. In a projecting type display device, however, a luminous flux emitted from a light source is separated into three primary lights by a color separating optical system and three light bulbs are disposed for each of the primary lights to enable a display of a full color image (see Fig. 5). By providing a color synthesizing unit such as a cross dichroic prism in a position of the glass block 2, it is possible to synthesize the three primary lights.

The first lens group $G_1$ is constituted by three lenses (a first lens $L_1$ to the third lens $L_3$) and is wholly moved in a direction of an optical axis z to carry out focusing.

In the first lens group $G_1$, moreover, the first lens $L_1$ on the most magnification side (a negative lens having a small power in a paraxial region) and the third lens $L_3$ (a negative lens having a small power) on the most reduction side are set to be double-sided aspherical surfaces, respectively. Furthermore, a second lens $L_2$ formed by a biconcave lens is disposed between the two aspherical lenses.

Thus, the negative lens disposed on a center is set to be the biconcave lens in the first lens group $G_1$. Irrespective of a bright lens system, consequently, the outside diameter of the first lens group $G_1$ may be reduced. Consequently, the whole lens system may become compact.

In addition, the lens on the most magnification side (the first lens $L_1$) and the lens on the most reduction side (the third lens $L_3$) are set to be the aspherical lenses in the first lens group $G_1$. That is, the biconcave lens (the second lens $L_2$) is interposed in the first lens group $G_1$ to be a focusing lens group having a great change in an angle of view and a great change in an optical path through the zooming. Consequently, the aspherical surfaces are disposed longitudinally apart from each other. Thus, it is possible to carry out an aberration correction well from a wide angle end to a telephoto end.

The aspherical surface of the first lens $L_1$ is suitable for correcting an aberration depending on an angle of view in order to correspond to an off-axis aberration such as a distortion or a curvature of field, and the aspherical surface of the third lens $L_3$ is suitable for carrying out a common aberration correction to an angle of view in order to correspond to an axial aberration such as a spherical aberration.

In case of a fixed focus wide angle lens for projection (having a fixed magnification), a first aspherical surface is disposed on an magnification side and a second aspherical surface is disposed in the vicinity of an aperture stop or on a reduction side so that it is possible to obtain an excellent aberration correcting performance. In case of a zoom lens, however, most of a change in an angle of view and a change in an optical path are generated in a lens portion on the magnification side. For this reason, an effect of carrying out an aberration correction of the second aspherical surface is reduced. In the case in which the aspherical surface is disposed in the vicinity of the aperture stop or on the reduction side, moreover, a requirement for precision in a shape is greatly increased. Therefore, there is also a problem in that a manufacture is hard to perform. According to the wide-angle zoom lens for projection in accordance with the embodiment, the problem may be solved.

Moreover, the first lens $L_1$ of the first lens group $G_1$ may be formed to continuously change the refractive power in a radial direction in order to have a negative refractive power in the vicinity of an optical axis, and furthermore, to have a positive refractive power in a predetermined position in a radial direction which is placed apart from the optical axis. In the case in which a position of the optical axis is set to be 0.0 and an outermost peripheral position of the lens is set to be 1.0, the predetermined position in the radial direction may have an optional value of 0.0 to 1.0 over a radius, for example, 0.3, 0.5 and 0.7. Consequently, it is possible to efficiently correct an aberration for a light having a desirable height.

In the first lens group $G_1$, moreover, the first lens $L_1$ is constituted by a plastic lens including a double-sided aspherical surface having a negative refractive power in a paraxial region and a positive refractive power in an outer peripheral region, the second lens $L_2$ is constituted by a biconcave spherical glass lens, and the third lens $L_3$ is constituted by a double-sided aspherical plastic lens having a negative refractive power in an almost whole region in the radial direction.

In this case, the second lens $L_2$ is set to be the biconcave lens. As compared with the case in which the second lens $L_2$ is set to be a negative meniscus lens, therefore, a power may be concentrated more easily. Consequently, the first lens $L_1$ and the third lens $L_3$ may be set to be special lenses for an aberration correction which have small powers. Accordingly, the first lens $L_1$ and the third lens $L_3$ which are the aspherical lenses may be formed of plastic. Therefore, it is possible to reduce weights of the first lens group $G_1$, and furthermore, the whole lens system.

Moreover, the lenses according to the embodiment may be constituted to satisfy at least one of the following conditional expressions (1) to (3).

$$3.0 < Bf/Fw \qquad (1)$$

$$1.7 < H_A < 2.0 \qquad (2)$$

$$1.7 < H_W < 2.0 \qquad (3)$$

Bf : a back focal length

Fw : a focal length of the whole system on the wide angle end

$H_A$ : a mean value of luminous flux diameters of axial on both surfaces of the aspherical lens on the reduction side in the case in which the both surfaces are aspherical surfaces when a diameters of an axial luminous flux is set to be 1.0 on an magnification side surface of the aspherical lens on the magnification side which is incident through the wide angle end in the focusing lens group

$H_W$ : a diameters of an axial luminous flux on the aspherical surface of the aspherical lens on the reduction side when the diameters of the axial luminous flux is set to be 1.0 on the magnification side surface of the aspherical lens on the magnification side which is incident through the wide angle end in the focusing lens group (luminous flux diameters of the axial on the both surfaces of the aspherical lens on the reduction side in the case in which the both surfaces are the aspherical surfaces)

The conditional expression (1) defines a ratio of the back focal length Bf to the focal length Fw of the whole system in the wide angle end. By satisfying the conditional expression (1), it is possible to maintain a sufficient space for providing a color separating prism or a TIR prism between the wide-angle zoom lens for projection and the image display surface 1 of the light bulb. When the ratio is lower than a lower limit value of the conditional expression (1), the back focal length Bf is excessively reduced so that it is hard to maintain a space for providing the color separating prism or the TIR prism between the wide-angle zoom lens for projection and the image display surface 1.

Moreover, the conditional expression (2) defines that an aspherical surface is disposed in a position where a mean value of the luminous flux diameters of the axial on the both surfaces in the aspherical lens on the reduction side is 1.7 to 2.0 in the case in which the both surfaces are the aspherical surfaces when a diameters of an axial luminous flux on an magnification side surface of the aspherical lens on the magnification side which is incident through the wide angle end is set to be 1.0 in the focusing lens group.

Furthermore, the conditional expression (3) defines that an aspherical surface is disposed in a position in which a diameters of an axial luminous flux on the aspherical surface of the aspherical lens on the reduction side (a diameters of an axial luminous flux on each on both surfaces of the aspherical lens on the reduction side in the case in which the both surfaces are aspherical surfaces) is 1.7 to 2.0 when the diameters of the axial luminous flux on the magnification side surface of the aspherical lens on the magnification side which is incident through the wide angle end is set to be 1.0 in the focusing lens group.

The inventor found that the conditional expressions (2) and (3) may efficiently control luminous fluxes at a wide angle and a telephoto by disposing the aspherical lens on the reduction side apart from the aspherical lens on the magnification side in the position in which the mean value of the luminous flux diameters of the axial on the both surfaces in the aspherical lens on the reduction side or the diameters of the axial luminous flux on the aspherical surface of the aspherical lens on the reduction side (the diameters of the axial luminous flux of each on the both surfaces of the aspherical lens on the reduction side in the case in which the both surfaces are aspherical surfaces) is 1.7 to 2.0 in the case in which the both surfaces are the aspherical surfaces when a maximum diameters of the axial luminous flux incident on a focusing lens group having a great change in an angle of view and a great change in an optical path through zooming is set to be 1.0 in the focusing lens group. Consequently, it is unnecessary to form an aspherical surface on a lens at the reduction side from the vicinity of the aperture stop (mask). By disposing the aspherical surface in a region having a great change in an aberration, it is possible to efficiently correct the aberration, thereby achieving an enhancement in a performance and a reduction in a size of a projecting zoom lens. When the aberration gets out of the range of the conditional expression (2), it is impossible to efficiently control a luminous flux at a wide angle and a telephoto. Thus, it is hard to efficiently correct the aberration.

Next, an example of a projecting type display device provided with the wide-angle zoom lens for projection will be described with reference to Fig. 5. The projecting type display device shown in Fig. 5 includes transmitting type liquid crystal panels 11a to 11c as light bulbs, and the wide-angle zoom lens 10 for projection according to the embodiment is used for a wide-angle zoom lens 10 for projection. Although a portion between a light source 20 and a dichroic mirror 12 is not shown, moreover, a white light emitted from the light source 20 is incident on the transmitting type liquid crystal panels 11a to 11c corresponding to three color luminous fluxes (G, B and R lights) respectively through an illumination optical portion and is thus subjected to a light modulation, and is subjected to a color synthesis by a cross dichroic prism 14 and is projected onto a screen (not shown) by the wide-angle zoom lens 10 for projection. The device includes dichroic mirrors 12 and 13 for a color separation, the cross dichroic prism 14 for the color synthesis, condenser lenses 16a to 16c, and total reflection mirrors 18a to 18c. The projecting type display device according to the embodiment uses the wide-angle zoom lens 10 for projection according to the embodiment. Consequently, it is possible to increase a f-number up to approximately F1.6 with a zoom function, and furthermore, to achieve a reduction in a size of the device. Therefore, it is possible to considerably enhance a portability of the device and a convenience in a bright room.

The wide-angle zoom lens for projection according to the present invention is not restricted to a using manner for a wide-angle zoom lens for projection of a projecting type display device utilizing a transmitting type liquid crystal display panel but may also be used in the case in which another light modulating unit such as a reflecting type liquid crystal display panel or a DMD is utilized.

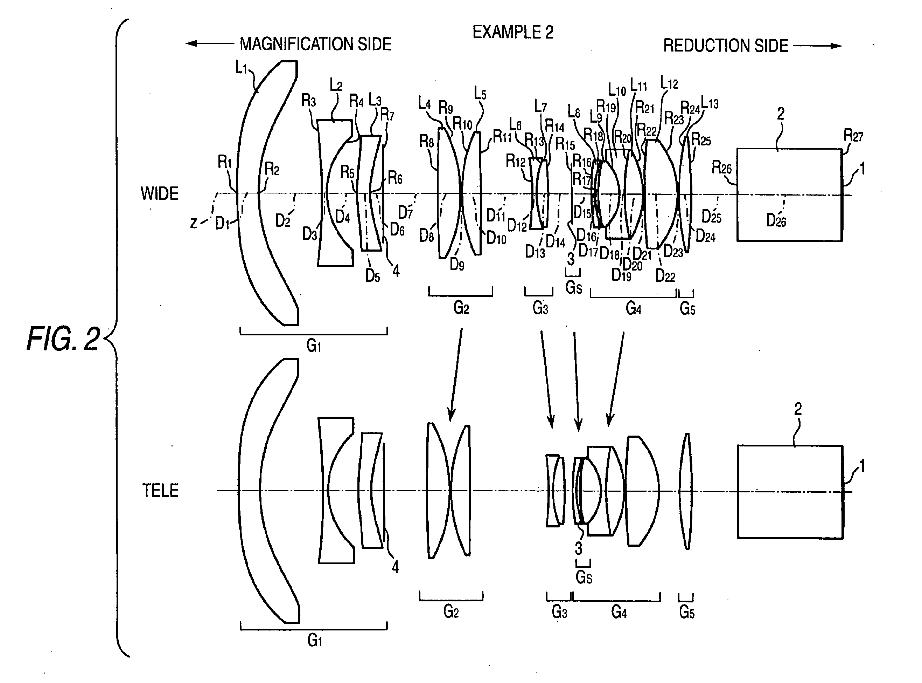

Description will be given to a specific example of the wide-angle zoom lens for projection according to the present invention. In Fig. 2 showing a structure according to a second example, members producing the same functions and advantages as those in the first example have the same reference numerals as those used in Fig. 1.

<First Example>

As shown in Fig. 1, a wide-angle zoom lens for projection according to the first example is provided with a first lens group $G_1$ which is fixed in a variable power, has a negative refractive power and carries out focusing, a second lens group $G_2$ having a positive refractive power and a third lens group $G_3$ having a small power which are moved along an optical axis in a variable power, an aperture stop 3 ($G_s$) which is independently movable in the variable power, a fourth lens group $G_4$ which is moved along the optical axis in the variable power and has a positive refractive power, and a fifth lens group $G_5$ for a pupil position fixation which is fixed in the variable power and has a positive refractive power in order from an magnification side in an arrangement on a wide angle end thereof, and a reduction side is set to be telecentric. Moreover, an image display surface 1 and a glass block 2 in a light bulb are arranged in this order from the reduction side at the reduction side of the fifth lens group $G_5$. The three zooming lens groups $G_2$ to $G_4$ are constituted to be moved independently of each other in the variable power, thereby carrying out zooming.

As described above, the first lens group $G_1$ is constituted by three lenses (first to third lenses $L_1$ to $L_3$). The first lens $L_1$ is constituted by a plastic lens including a double-sided aspherical surface having a negative refractive power in a paraxial region and a positive refractive power in an outer peripheral region, the second lens $L_2$ is constituted by a biconcave spherical glass lens, and the third lens $L_3$ is constituted by a double-sided aspherical plastic lens having a negative refractive power in an almost whole region in a radial direction. The third lens $L_3$ may also be constituted by a glass lens or a mold lens.

The second lens group $G_2$ includes a fourth lens $L_4$ to be a biconvex lens and a fifth lens $L_5$ constituted by a positive meniscus lens.

The third lens group $G_3$ is constituted by a cemented lens obtained by cementing a sixth lens $L_6$ to be a biconcave lens and a seventh lens $L_7$ constituted by a biconvex lens.

The fourth lens group $G_4$ includes an eighth lens $L_8$ to be a double aspherical lens having a convex surface turned toward an magnification side, a ninth lens $L_9$ to be a biconvex lens, a tenth lens $L_{10}$ to be a biconcave lens, an eleventh lens $L_{11}$ to be a biconvex lens, and a twelfth lens $L_{12}$ to be a biconvex lens. The ninth lens $L_9$, the tenth lens $G_{10}$ and the eleventh lens $L_{11}$ are cemented to each other, thereby constituting a three-cemented lens.

Moreover, the fifth lens group $G_5$ is disposed to prevent a position of an emitting pupil of a whole system from being changed in the variable power and is constituted by only a thirteenth lens $L_{13}$ to be a biconvex lens.

A shape of each of the aspherical surfaces in the first lens $L_1$ and the third lens $L_3$ is defined in accordance with the following equation for the aspherical surface. Referring to the aspherical lenses, it is possible to obtain an aberration correcting effect also in the case in which one of the surfaces is set to be the aspherical surface. However, a lens having both surfaces set to be aspherical surfaces is more preferable.

[Equation 1]

$$Z = \frac{Y^2 / R}{1 + \sqrt{1 - K * Y^2 / R^2}} + \sum_{i=2}^{6} A_{2i} Y^{2i}$$

where

Z : a length of a perpendicular line drawn from a point on an aspherical surface which is placed from an optical axis at a distance Y onto a tangential plane of an apex of the aspherical surface (a perpendicular plane to the optical axis)
Y : a distance from the optical axis
R : a radius of curvature in the vicinity of the optical axis of the aspherical surface
K : an eccentricity
$A_{2i}$ : a coefficient of the aspherical surface (i = 2 to 6)

Next, there are shown, in an upper stage of Table 1, values of a radius of curvature R of each lens surface of the wide-angle zoom lens for projection according to the first example (a focal length of the whole system on the wide angle end is standardized to be 1.0, which is the same as that of the second example), a central thickness of each lens and an air space between the lenses (which will be hereinafter referred to as an "axial spacing") D (the focal length of the whole system on the wide angle end is standardized to be 1.0, which is the same as that in the second example), and a refractive index $N_e$ and an Abbe number $\nu_e$ on an e line of each lens. In the Table 1 and the following Table 2, a numeral of a surface number represents order from the magnification side. In the first example and the following second example, the radius of curvature R of the aspherical surfaces is indicated as a value of a radius of curvature on an optical axis X in each Table. For easy understanding of a corresponding view showing a structure of the lens, a lead line is not always led from an intersection with the optical axis z.

[Table 1]

Focal length Fw/Ft of the whole system: 1.0 to 1.2
F-number: F1.6
Angle of view: 94.0 degrees
Back focal length: 3.62

| Surface number | R | D | $N_e$ | $\nu_e$ |
|---|---|---|---|---|
| 1(Asherical surface) | 42.2566 | 0.6760 | 1.49300 | 57.4 |
| 2(Asherical surface) | 6.1710 | 1.9042 | | |
| 3 | -22.6714 | 0.1622 | 1.83931 | 36.9 |
| 4 | 2.0908 | 0.9582 | | |
| 5(Asherical surface) | 6.8100 | 0.4056 | 1.49300 | 57.4 |
| 6(Asherical surface) | 3.1178 | 0.4056 | | |
| 7 (Mask) | ∞ | 1.6866 (Variable 1) | | |
| 8 | 9.9861 | 0.7743 | 1.48914 | 70.1 |
| 9 | -4.5895 | 0.0412 | | |
| 10 | 4.7179 | 0.4415 | 1.85503 | 23.6 |
| 11 | 47.3479 | 1.6873 (Variable 2) | | |
| 12 | -7.2145 | 0.1352 | 1.83945 | 42.5 |
| 13 | 2.9445 | 0.3457 | 1.48914 | 70.1 |
| 14 | -7.4509 | 0.4873(Variable 3) | | |

(continued)

Focal length Fw/Ft of the whole system: 1.0 to 1.2

F-number: F1.6

Angle of view: 94.0 degrees

Back focal length: 3.62

| Surface number | R | D | $N_e$ | $\nu_e$ |
|---|---|---|---|---|
| 15 (Stop) | ∞ | 0.6890 (Variable 4) | | |
| 16 | 5.9508 | 0.1081 | 1.83931 | 36.9 |
| 17 | 2.5215 | 0.1113 | | |
| 18 | 3.6942 | 0.7094 | 1.48914 | 70.1 |
| 19 | -1.3974 | 0.1622 | 1.83931 | 36.9 |
| 20 | 8.4501 | 0.5708 | 1.49845 | 81.0 |
| 21 | -2.6643 | 0.0443 | | |
| 22 | 18.6326 | 0.8981 | 1.43845 | 81.0 |
| 23 | -2.4805 | 0.0426(Variable 5) | | |
| 24 | 6.8745 | 0.3756 | 1.79012 | 43.9 |
| 25 | -19.8571 | 1.4613 | | |
| 26 | ∞ | 3.2719 | 1.51824 | 63.9 |
| 27 | ∞ | 0.0204 | | |

[Coefficient of aspherical surface]

| Surface number K | $A_4$ | $A_6$ | $A_8$ | $A_{10}$ | $A_{12}$ |
|---|---|---|---|---|---|
| 1st surface 1.00000 | 3.157431E-03 | -4.251212E-04 | 2.47791BE-05 | -8.020318E-07 | 1.448572E-08 |
| 2nd surface 1.00000 | 3.354116E-03 | -1.540803E-04 | -4.28007BE-05 | 3.522034E-06 | -8.128997E-08 |
| 5th surface 1.00000 | -1.600957E-02 | 1.458089E-03 | 3.257296E-04 | -7.465129E-05 | 5-381475E-05 |
| 6th surface 1.00000 | -2.244455E-02 | 5.833218E-04 | 1.297273E-04 | 5.705621E-05 | -1.009954E-05 |

[Variable interval]

| | $D_7$ (Variavle 1) | $D_{11}$(Variavle 2) | $D_{14}$(Vafiavle 3) | $D_{15}$(Variavle 4) | $D_{23}$(Variavle 5) |
|---|---|---|---|---|---|
| WIDE | 1.6866 | 1.6873 | 0.4873 | 0.6889 | 0.0426 |
| MEDIUM | 1.4976 | 2.0274 | 0.5195 | 0.1836 | 0.3658 |
| TELE | 1.3520 | 2.3656 | 0.4319 | -0.2190 | 0.6611 |

Moreover, a middle stage of the Table 1 shows the values of the constants K, $A_4$, $A_6$, $A_8$, $A_{10}$ and $A_{12}$ corresponding to the respective aspherical surfaces.

In the wide-angle zoom lens for projection according to the first example described above, furthermore, the zooming lens groups $G_2$ to $G_4$ and the aperture stop 3 are moved independently of each other in the direction of the optical axis z in the variable power. The values of the variable intervals ($D_7$, $D_{11}$, $D_{14}$, $D_{15}$, $D_{23}$) in a wide angle end (WIDE) and a telescopic end (TELE), and their medium position (MEDIUM) are shown in a lower stage of the Table 1.

In the first example, as described in the Table 1, the focal length Fw of the whole system on the wide angle end is 1.0 (the focal length Ft of the whole system on the telescopic end is 1.2), the f-number is F1.6, the angle of view on the wide angle end is 94.0 degrees, and the back focal length Bf is 3.62. Accordingly, it is possible to obtain a bright and proper back focal length having a great angle of view. Consequently, it is possible to obtain a wide-angle zoom lens for projection having a zoom magnification of 1.2.

In the first example, moreover, a value corresponding to the conditional expression (1) is 3.62. Moreover, a value corresponding to the conditional expression (2) is 1.798. Furthermore, a value corresponding to the conditional expression (3) is 1.727 for the fifth surface and is 1.868 for the sixth surface. Accordingly, all of the conditional expressions (1) to (3) are satisfied.

Table 3 collectively shows numeric values corresponding to the conditional expressions (1) to (3) according to the first example.

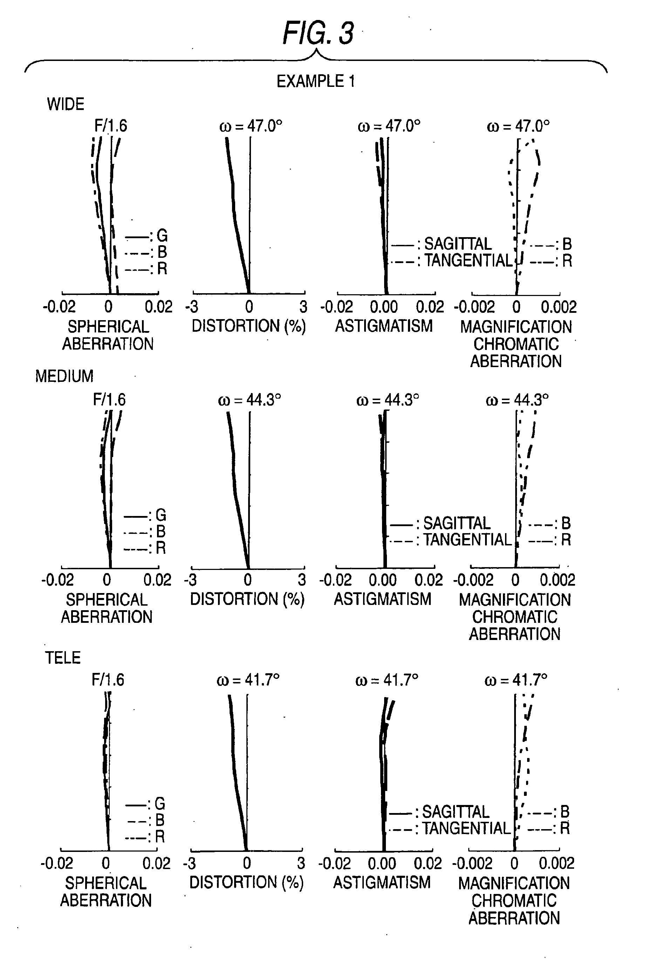

Moreover, Fig. 3 is an aberration chart showing various aberrations (a spherical aberration, a distortion, an astigmatism and a magnification chromatic aberration) on the wide angle end (WIDE) and the telescopic end (TELE) of the wide-angle zoom lens for projection according to the first example. In the aberration charts, ω indicates a half angle of view. The aberration chart for the spherical aberration shows an aberration curve for each of G (green), B (blue) and R (red) lights, and the aberration chart for the magnification chromatic aberration shows an aberration curve for each of the B and R lights with respect to the G light (which are the same as those in the following Table 2). As shown in Fig. 3, it is apparent that the wide-angle zoom lens for projection according to the first example has each aberration corrected well.

<Second Example>

As shown in Fig. 2, in the same manner as the wide-angle zoom lens for projection according to the first example, a wide-angle zoom lens for projection according to a second example is provided with a first lens group $G_1$ which is fixed in a variable power, has a negative refractive power and carries out focusing, a second lens group $G_2$ having a positive refractive power and a third lens group $G_3$ having a small power which are moved along an optical axis in the variable power, an aperture stop 3 ($G_s$) which is independently movable in the variable power, a fourth lens group $G_4$ which is moved along the optical axis in the variable power and has a positive refractive power, and a fifth lens group $G_5$ for a pupil position fixation which is fixed in the variable power and has a positive refractive power, and a reduction side is set to be telecentric. Moreover, an image display surface 1 and a glass block 2 in a light bulb are arranged in this order from the reduction side at the reduction side of the fifth lens group $G_5$. The three zooming lens groups $G_2$ to $G_4$ are constituted to be moved independently of each other in the variable power, thereby carrying out zooming.

In the same manner as the wide-angle zoom lens for projection according to the first example, moreover, the first lens group $G_1$ is constituted by three lenses (first to third lenses $L_1$ to $L_3$) as described above. The first lens $L_1$ is constituted by a plastic lens including a double-sided aspherical surface having a negative refractive power in a paraxial region and a positive refractive power in an outer peripheral region, the second lens $L_2$ is constituted by a biconcave spherical glass lens, and the third lens $L_3$ is constituted by a double-sided aspherical plastic lens having a negative refractive power in an almost whole region in a radial direction.

Since the other structures are almost the same as those of the wide-angle zoom lens for projection according to the first example, detailed description thereof will be omitted.

A shape of each of the aspherical surfaces in the first lens $L_1$ and the third lens $L_3$ is defined by the equation for the aspherical surface.

An upper stage of the Table 2 shows values of a radius of curvature R of each lens surface of the wide-angle zoom lens for projection according to the second example, an axial spacing D of each lens, and a refractive index $N_e$ and an Abbe number νe on an e line of each lens.

[Table 2]

Focal length Fw of the whole system: 1.0 to 1.2
F-number: F1.6
Angle of view: 93.9 degrees
Back focal length: 3.62

| Surface number | R | D | $N_e$ | $v_e$ |
|---|---|---|---|---|
| 1 (Aspherical surface) | 22.6354 | 0.6745 | 1.49300 | 57.4 |
| 2 (Aspherical surface) | 5.0745 | 1.9866 | | |
| 3 | -18.1790 | 0.1618 | 1.83931 | 36.9 |
| 4 | 2.2919 | 0.9561 | | |
| 5 (Aspherical surface) | 5.9489 | 0.4047 | 1.49300 | 57.4 |
| 6 (Aspherical surface) | 2.9851 | 0.4047 | | |
| 7 (Mask) | ∞ | 1.7230(Variable 1) | | |
| 8 | 41.8042 | 0.7193 | 1.48914 | 70.1 |
| 9 | -4.2174 | 0.0415 | | |

(continued)

Focal length Fw of the whole system: 1.0 to 1.2

F-number: F1.6

Angle of view: 93.9 degrees

Back focal length: 3.62

| Surface number | R | D | $N_e$ | $\nu_e$ |
|---|---|---|---|---|
| 10 | 4.4282 | 0.5973 | 1.76166 | 27.3 |
| 11 | -158.1095 | 1.6262(Variable 2) | | |
| 12 | -7.8706 | 0.1349 | 1.75843 | 52.1 |
| 13 | 2.9206 | 0.3664 | 1.48914 | 70.1 |
| 14 | -10.4824 | 0.7493 (Variable 3) | | |
| 15(Stop) | ∞ | 0.6036 (Variable 4) | | |
| 16 | 6.2416 | 0.1079 | 1.83931 | 36.9 |
| 17 | 2.5721 | 0.1165 | | |
| 18 | 4.1330 | 0.6623 | 1.48914 | 70.1 |
| 19 | -1.3898 | 0.1618 | 1.83931 | 36.9 |
| 20 | 6.6070 | 0.5668 | 1.49845 | 81.0 |
| 21 | -2.6360 | 0.0443 | | |
| 22 | 15.6184 | 1.0482 | 1.49845 | 81.0 |
| 23 | -2.5078 | 0.0413(Variable 5) | 1.00000 | |
| 24 | 7.2906 | 0.3811 | 1.79195 | 47.1 |
| 25 | -15.7926 | 1.4570 | | |
| 26 | ∞ | 3.2648 | 1.51824 | 63.9 |
| 27 | ∞ | 0.0209 | | |

[Coefficient of aspherical surface]

| Surface number K | $A_4$ | $A_6$ | $A_8$ | $A_{10}$ | $A_{12}$ |
|---|---|---|---|---|---|
| 1st surface 1.00000 | 6.259367E-03 | -3.360703E-04 | 1.805288E-05 | -5.278708E-07 | 1.160490E-08 |
| 2nd surface 1.00000 | 2.674416E-03 | -6.626161E-06 | -1.389910E-05 | 5.356880E-06 | -1.196250E-07 |
| 5te surface 1.00000 | -1.809847E-02 | 3.159190E-04 | -1.794955E-04 | 1.157534E-04 | 6.674128E-06 |
| 6th surface 1.00000 | -2.416317E-02 | -4.036508E-04 | -3.999035E-05 | 1.574097E-04 | -2.596436E-05 |

[Variable interval]

| | $D_7$(Variable 1) | $D_1$, (Variable 2) | $D_{14}$(Variable 3) | $D_{15}$(Variable 4) | $D_{23}$(Variable 5) |
|---|---|---|---|---|---|
| WIDE | 1.7230 | 1.6282 | 4.7493 | 0.6036 | 0.0413 |
| MEDIUM | 1.5177 | 2.0521 | 0.6231 | 0.2092 | 0.3421 |
| TELE | 1.3491 | 2.4919 | 0.5109 | -0.2537 | 0.6443 |

Moreover, a middle stage of the Table 2 shows the values of the constants K, $A_4$, $A_6$, $A_8$, $A_{10}$ and $A_{12}$ corresponding to the respective aspherical surfaces.

In the wide-angle zoom lens for projection according to the second example described above, furthermore, the zooming lens groups $G_2$ to $G_4$ and the aperture stop 3 are moved independently of each other in the direction of an optical axis z in the variable power. The values of the variable intervals ($D_7$, $D_{11}$, $D_{14}$, $D_{15}$, $D_{23}$) in a wide angle end (WIDE) and a telescopic end (TELE), and their medium position (MEDIUM) are shown in a lower stage of the Table 2.

In the second example, as described in the Table 2, the focal length Fw of the whole system on the wide angle end is 1.0 (the focal length Ft of the whole system on the telescopic end is 1.2), the f-number is F1.6, the angle of view on the wide angle end is 93.9 degrees, and the back focal length Bf is 3.62. Accordingly, it is possible to obtain a bright and proper back focal length having a great angle of view. Consequently, it is possible to obtain a wide-angle zoom lens for projection having a zoom magnification of 1.2.

In the second example, moreover, a value corresponding to the conditional expression (1) is 3.62. Furthermore, a value corresponding to the conditional expression (2) is 1.789. In addition, a value corresponding to the conditional expression (3) is 1.724 for the fifth surface and is 1.855 for the sixth surface. Accordingly, all of the conditional expressions (1) to (3) are satisfied.

The Table 3 collectively shows numeric values corresponding to the conditional expressions (1) to (3) according to the second example.

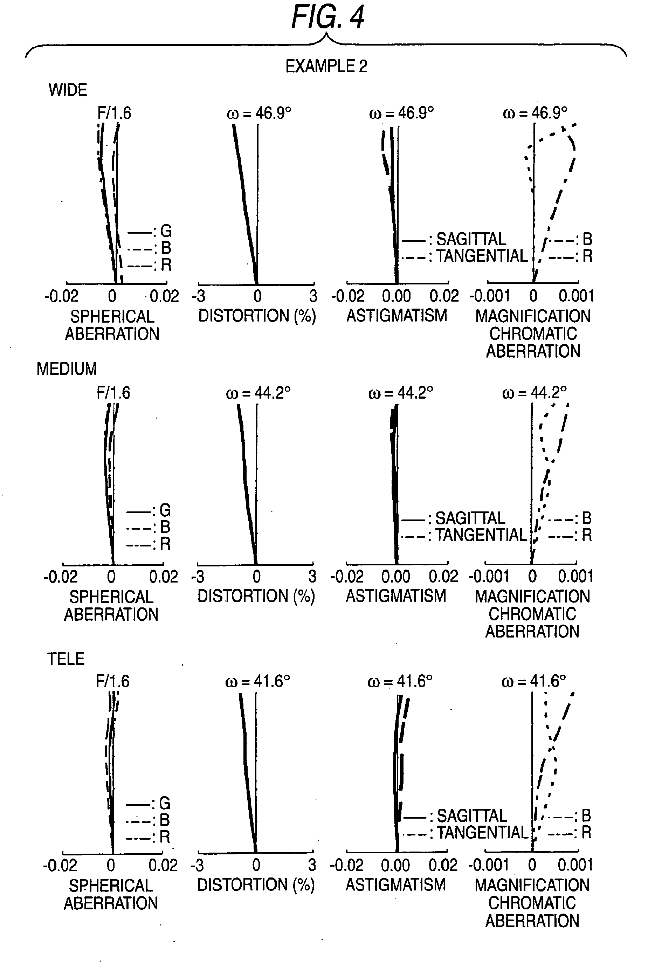

Moreover, Fig. 4 is an aberration chart showing various aberrations (a spherical aberration, a distortion, an astigmatism and a magnification chromatic aberration) on the wide angle end (WIDE) and the telescopic end (TELE) of the wide-angle zoom lens for projection according to the second example. In the aberration charts, $\omega$ indicates a half angle of view. The aberration chart for the spherical aberration shows an aberration curve for each of G (green), B (blue) and R (red) lights, and the aberration chart for the magnification chromatic aberration shows an aberration curve for each of the B and R lights with respect to the G light. As shown in Fig. 4, it is apparent that the wide-angle zoom lens for projection according to the second example has each aberration corrected well.

The wide-angle zoom lens for projection according to the present invention is not restricted to that according to each of the examples but manners may be variously changed. For example, it is possible to properly change the radius of curvature R and the axial spacing D in each lens.

Moreover, the projecting type display device according to the present invention is not restricted to the structure but it is possible to employ various structures of the device including the wide-angle zoom lens for projection according to the present invention. As the light bulb, for instance, it is possible to use a transmitting type or reflecting type liquid crystal display device or a micromirror element in which a large number of micromirrors capable of changing a tilt are formed on an almost plane (for example, a digital micromirror device manufactured by Texas Instruments, Inc.). For the illumination optical system, moreover, it is possible to employ a proper structure corresponding to a type of the light bulb.

[Table 3]

|  | First Example | Second Example |
|---|---|---|
| Conditional Expression (1) Bf/Fw | 3.62 | 3.62 |
| Conditional Expression (2) $H_A$ | 1.798 | 1.789 |
| Conditional Expression (3) Hw | 1.727 (Fifth Surface) 1.868 (Sixth Surface) | 1.724 (Fifth Surface) 1.855 (Sixth Surface) |

**Claims**

1. A wide-angle zoom lens for projection comprising, in order from a magnification side thereof:

   a focusing lens group that has a negative refractive power and is stationary during a variation of a magnification of the wide-angle zoom lens;
   three zooming lens groups that are moved independently of each other during the variation of the magnification; and
   a fixed lens group that is stationary during the variation of the magnification,
   wherein a reduction side of the wide-angle zoom lens is telecentric and has a half angle of view which is 40 degrees or more, and
   wherein the focusing lens group includes, in order from the magnification side, a first aspherical lens, a biconcave lens, and a second aspherical lens.

2. The wide-angle zoom lens for projection according to claim 1, satisfying conditional expression (1):

$$3.0 < \mathrm{Bf/Fw},$$

   wherein Bf represents a back focal length of the wide-angle zoom lens, and

   Fw represents a focal length on a wide angle end of the wide-angle zoom lens.

3. The wide-angle zoom lens for projection according to claim 1 or 2, wherein both surfaces of the second aspherical lens are aspherical surfaces, and the wide-angle zoom lens satisfies conditional expression (2):

$$1.7 < H_A < 2.0,$$

wherein $H_A$ represents a mean value of diameters of an axial luminous flux on the both surfaces of the second aspherical lens in the focusing lens group when the wide-angle zoom lens is placed at an wide angle end thereof and a diameters of the axial luminous flux on an magnification side surface of the first aspherical lens is 1.0.

4. The wide-angle zoom lens for projection according to claim 1 or 2, wherein at least one of both surfaces of the second aspherical lens is aspherical surface, and the wide-angle zoom lens satisfies conditional expression (3):

$$1.7 < Hw < 2.0,$$

wherein

Hw represents diameters of an axial luminous flux on the aspherical surface of the second aspherical lens in the focusing lens group when the wide-angle zoom lens is placed at an wide angle end thereof and diameters of the axial luminous flux on an magnification side surface of the first aspherical lens is 1.0.

5. The wide-angle zoom lens for projection according to any of claims 1 to 4, wherein the first aspherical lens has a negative refractive power in a vicinity of an optical axis thereof and a positive refractive power in a region thereof which is placed apart from the optical axis in a radial direction.

6. A projecting type display device comprising:

a light source;
a light bulb;
an illumination optical portion which leads a luminous flux emitted from the light source to the light bulb; and
a wide-angle zoom lens for projection according to any of claims 1 to 5, wherein the light bulb optically modulates the luminous flux emitted from the light source and the wide-angle zoom lens for projection projects a modulated luminous flux onto a screen.

FIG. 1

FIG. 2

EXAMPLE 2

EP 2 108 989 A1

## FIG. 3

EXAMPLE 1

# FIG. 4

## EXAMPLE 2

WIDE

MEDIUM

TELE

## FIG. 5

Europäisches
Patentamt

European
Patent Office

Office européen
des brevets

# EUROPEAN SEARCH REPORT

**Application Number**

EP 09 00 4128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2000 206409 A (CANON KK) 28 July 2000 (2000-07-28) * abstract; tables 3-5 * ----- | 1-6 | INV. G02B13/06 G02B15/177 |
| X | JP 2001 066499 A (CANON KK) 16 March 2001 (2001-03-16) * abstract; tables 1,2 * ----- | 1-6 | |
| A | WO 2007/049504 A (KONICA MINOLTA OPTO INC [JP]; MATSUSAKA KEIJI [JP]) 3 May 2007 (2007-05-03) * figure 1c * ----- | 1-6 | |
| | | | TECHNICAL FIELDS SEARCHED (IPC) |
| | | | G02B |

The present search report has been drawn up for all claims

| Place of search | Date of completion of the search | Examiner |
|---|---|---|
| Munich | 11 May 2009 | Daffner, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 00 4128

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2009

| Patent document cited in search report | | Publication date | Patent family member(s) | | Publication date |
|---|---|---|---|---|---|
| JP 2000206409 | A | 28-07-2000 | NONE | | |
| JP 2001066499 | A | 16-03-2001 | NONE | | |
| WO 2007049504 | A | 03-05-2007 | CN | 101331418 A | 24-12-2008 |
| | | | EP | 1950593 A2 | 30-07-2008 |
| | | | JP | 2007121459 A | 17-05-2007 |
| | | | US | 2009115884 A1 | 07-05-2009 |

EPO FORM P0459

For more details about this annex : see Official Journal of the European Patent Office, No. 12/82

**EP 2 108 989 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003015038 A